# EUROPEAN PATENT APPLICATION

(11) **EP 4 201 839 A1**
(43) Date of publication of application: **28.06.2023**
(21) Application number: 20950284.8
(22) Date of filing: 19.08.2020
(51) Int. Cl.: B65D 85/10

(54) **WRAPPING MATERIAL FOR COMMERCIAL TOBACCO PRODUCTS AND PACKAGE FOR COMMERCIAL TOBACCO PRODUCTS**

(71) Applicant: Japan Tobacco Inc., Tokyo 105-6927 (JP)
(72) Inventor: ONUMA, Yuta, Tokyo 130-8603 (JP); ONO, Hiroyoshi, Tokyo 130-8603 (JP); IWATA, Shinichi, Tokyo 130-8603 (JP)
(74) Representative: Hoffmann Eitle
(86) International application number: PCT/JP2020/031301
(87) International publication number: WO 2022/038719

(57) **Abstract**

Provided are a wrapping material and package that are for commercial tobacco products, that are capable of tightly sealing commercial tobacco products, and that are environmentally friendlier than conventional materials and packages because of using less amount of resin materials. This sheet-shaped wrapping material is for forming a package that is for commercial tobacco products and that wraps the commercial tobacco products in a tightly-sealed internal containing portion. The wrapping material comprises: a paper base layer containing a fibrous cellulose material; an aluminum-containing layer that is layered on top of the paper base layer; and a heat seal layer that is formed as an outer layer on at least one side of the wrapping material, and that is a coating of a heat-sealing agent that heat-seals edges of the wrapping material together. The thickness of the heat seal layer is 0.5-5 µm.

## Description

### Technical Field

The present invention relates to a tobacco product packaging material and a tobacco product package.

### Background Art

Various packaging materials have been used to package tobacco products. Typical known examples of the packaging materials include hard packages and soft packages in which a prescribed number of (e.g., about 20) tobacco articles are bundled and packaged.

For example, one well-known form of the hard package is a hinged-lid package including an outer box and a lid connected to the outer box through a hinge so as to be openable and closable. Generally, tobacco products housed in the outer box are wrapped in an inner pack formed by folding a soft sheet material and then housed in the outer box. Typically, the soft package is formed by wrapping tobacco products in an inner pack formed by folding an inner packaging paper sheet and then wrapping the inner pack with a soft external packaging paper sheet.

In the various packages described above, folded edge portions of the inner pack that is used to wrap the tobacco products therein are not sealed, and it is therefore difficult for the inner pack itself to provide airtightness for the tobacco products. For example, tobacco products are typically shipped with the content of water vapor in the tobacco products controlled. Therefore, when the packaging material wrapping the tobacco products has no water vapor barrier property, the amount of water vapor in the tobacco products increases or decreases during, for example, distribution and storage of the tobacco products, and this may influence the smoke taste of the tobacco products. Moreover, when water vapor enters the packaging material from the outside, stains may be formed in rolling paper of the tobacco products wrapped with the packaging material. Specifically, when the water vapor barrier property of the packaging material is not high enough, the quality of the tobacco products wrapped with the packaging material may deteriorate.

Therefore, in each of the various conventional packages, the outer surface of the package is further covered with a transparent resin packaging film to seal the package. However, in recent years, it is preferable to omit the resin film externally covering the package, in terms of environmental consciousness and the need for resource conservation.

In connection with the above, PTL 1 discloses a technique for forming a package blank from a layered sheet prepared by stacking a plastic film such as a polyethylene terephthalate (PET) film or a polyethylene (PE) film on a paper substrate.

PTL 2 discloses a technique that uses a package blank having a layer structure including: a base layer containing a fibrous cellulose-based material; a metal-containing layer provided on the outer side of the base layer; and a sealable layer containing a sealable polymer material and provided at least in a sealing region on the inner side of the base layer.

### Citation List

### Patent Literature

PTL 1: International Publication No. WO2018/092179
PTL 2: Japanese Unexamined Patent Application Publication (Translation of PCT Application) No. 2020-500126

### Summary of Invention

### Technical Problem

It is stated that, with the packages described in PTL 1 and PTL 2, the tobacco products can be sealed in the packages. However, the package described in PTL 1 uses the technique in which the plastic film is stacked on the paper substrate. Therefore, the thickness of the plastic film is large, and the environmental consciousness of the package may not be sufficient. The package disclosed in PTL 2 contains a polyolefin-based polymer and an acrylic-based polymer as polymer materials contained in the sealable layer of the package. In particular, the package disclosed contains polyethylene or polypropylene. However, the contents of the polymer materials are not specified.

The present invention has been made in view of the foregoing circumstances, and it is an object to provide a tobacco product packaging material and a tobacco product package that can house tobacco products in a sealed manner. Moreover, the amount of the resin material used is small, so that the tobacco product packaging material and the tobacco product package are more environmentally conscious than the conventional products.

### Solution to Problem

One aspect of the tobacco product packaging material according to the present invention is a sheet-shaped packaging material for forming a tobacco product package having a sealed internal housing portion that encloses a tobacco product. The tobacco product packaging material includes: a paper base layer containing a fibrous cellulose-based material; an aluminum-containing layer stacked on the paper base layer; and a heat-seal layer formed as an outer layer on at least one side of the packaging material by applying a heat-seal agent for heat-sealing together edge portions of the packaging material. The heat-seal layer has a thickness of from 0.5 µm to 5 µm inclusive.

The heat-seal layer may be formed only on one side of the packaging material. In this case, the heat-seal layer may be formed over an entire area on the one side of the packaging material. Alternatively, the heat-seal layer may be formed only in an outer edge portion on the one side of the packaging material.

The heat-seal layer may be formed on opposite sides of the packaging material. In this case, the heat-seal layer may be formed over entire areas on the opposite sides of the packaging material. Alternatively, the heat-seal layer may be formed only in outer edge portions on the opposite sides of the packaging material.

The present invention can also be specified as a tobacco product package formed from any of the tobacco product packaging materials described above. The package includes: a tobacco product housed in the internal housing portion sealed by the packaging material; and a heat-sealed portion formed by heat-sealing together edge portions of the packaging material.

In the tobacco product package according to the present invention, the heat-seal layer of the packaging material may be formed so as to form at least an inner surface of the package that faces the internal housing portion, and the heat-sealed portion may be formed as a fin seal in which bent edge portions of the packaging material are butted against each other. In this case, the aluminum-containing layer of the packaging material may be disposed on the inner surface side of the package, and the paper base layer may be disposed on the outer surface side opposite to the inner surface side. Moreover, the heat-seal layer may be stacked on the aluminum-containing layer.

In the tobacco product package according to the present invention, the heat-seal layer of the packaging material may be formed so as to form also an outer surface of the package that is opposite to the inner surface thereof. The heat-sealed portion formed as the fin seal may be folded over onto a portion close to the heat-sealed portion, and the outer surface of the heat-sealed portion and the outer surface of the portion close to the heat-sealed portion may be bonded together

In the tobacco product package according to the present invention, the heat-seal layer of the packaging material may be formed so as to form an inner surface of the package that faces the internal housing portion and to form an outer surface of the package that is opposite to the inner surface, and the heat-sealed portion may be formed as a lap seal in which the heat-seal layer formed so as to form the inner surface in one edge portion of the packaging material and the heat-seal layer formed so as to form the outer surface in another edge portion of the packaging material are lapped together.

The means for solving the problems of the present invention may be used in any possible combination. Advantageous Effects of Invention

The tobacco product packaging material and the tobacco product package provided by the present invention can house tobacco products in a sealed manner. Moreover, the amount of the resin material used is small, so that the tobacco product packaging material and the tobacco product package are more environmentally conscious than the conventional products.

### Brief Description of Drawings

[Fig. 1] Fig. 1 is an outer perspective view of a package according to embodiment 1.
[Fig. 2] Fig. 2 is a plan view showing a sheet-shaped packaging material for forming the package according to embodiment 1.
[Fig. 3] Fig. 3 is an illustration showing the layer structure of the packaging material forming the package according to embodiment 1.
[Fig. 4] Fig. 4 is an illustration schematically showing a cross-sectional structure of an outer sheath including a heat-sealed portion in the package according to embodiment 1.
[Fig. 5] Fig. 5 is an illustration showing the layer structure of a packaging material in modification 1.
[Fig. 6] Fig. 6 is an illustration showing the layer structure of a packaging material in modification 2.
[Fig. 7] Fig. 7 is an outer perspective view of a package in embodiment 2.
[Fig. 8] Fig. 8 is a plan view of a packaging material for forming the package according to embodiment 2.
[Fig. 9] Fig. 9 is an illustration showing the layer structure of the packaging material forming the package according to embodiment 2.
[Fig. 10] Fig. 10 is an illustration showing a procedure for folding the packaging material when the package according to embodiment 2 is assembled.
[Fig. 11] Fig. 11 is an illustration showing the procedure for folding the packaging material when the package according to embodiment 2 is assembled.
[Fig. 12] Fig. 12 is an illustration showing the procedure for folding the packaging material when the package according to embodiment 2 is assembled.
[Fig. 13] Fig. 13 is an illustration showing the procedure for folding the packaging material when the package according to embodiment 2 is assembled.
[Fig. 14] Fig. 14 is an illustration schematically showing a cross-sectional structure of a portion near a heat-sealed portion in the package according to embodiment 2.
[Fig. 15] Fig. 15 is an illustration schematically showing a cross-sectional structure of a portion near a heat-sealed portion when a packaging material according to modification 3 is used to form a package.

### Description of Embodiments

Embodiments of the tobacco product packaging material and the package according to the present invention will be described with reference to the drawings. The sizes, materials, shapes, and relative arrangements of components described in the embodiments are merely examples.

### <Embodiment 1>

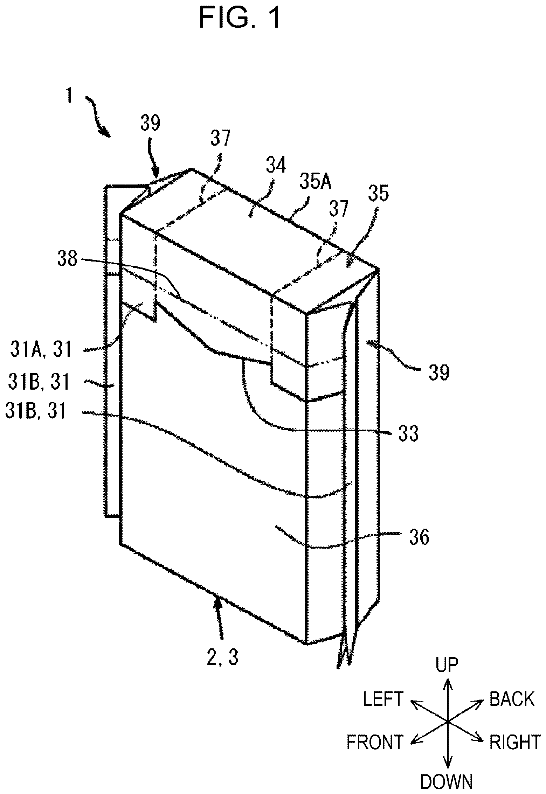

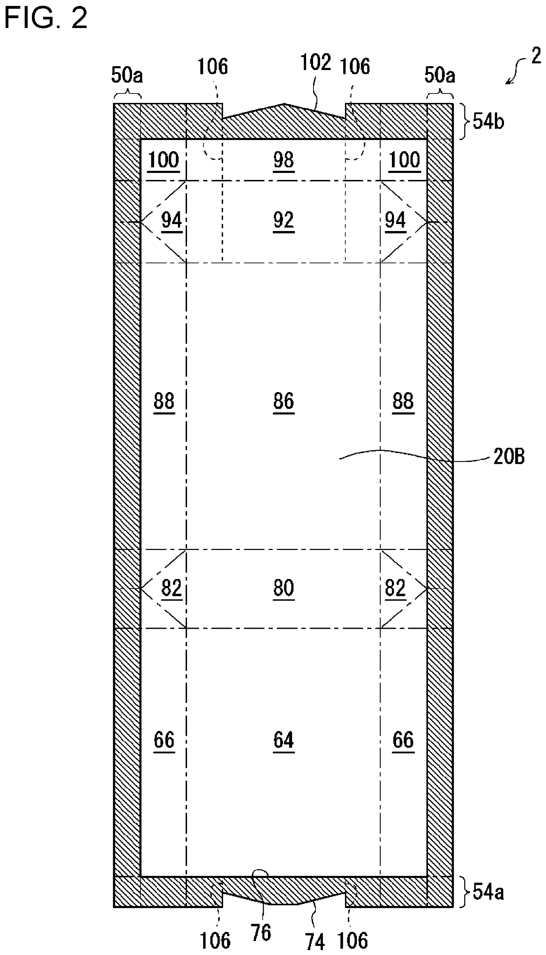

Fig. 1 is an outer perspective view of a tobacco product package 1 (which may be hereinafter referred to simply as a "package") according to embodiment 1. Fig. 2 is a plan view showing a sheet shaped tobacco product packaging material 2 (which may be hereinafter referred to simply as a "packaging material") for forming the package 1 according to embodiment 1. The package 1 has a substantially rectangular parallelepipedic box shape and includes an outer sheath 3 that is prepared by folding the sheet-shaped packaging material 2 shown in Fig. 2 and houses a bundle of tobacco products. A sealed internal housing portion is formed inside the outer sheath 3 of the package 1, and the tobacco products are housed in the internal housing portion.

Fig. 1 shows the upward, downward, left, right, frontward, and backward directions of the package 1. However, the upward, downward, left, right, frontward, and backward directions of the package 1 are used to describe the relative positional relations among components of the package 1 and do not indicate the absolute directions of the package 1. The upward-downward direction of the package 1 may be referred to as a "height direction," and the left-right direction may be referred to as a "width direction." The forward-backward direction may be referred to as a "depth direction."

The outer sheath 3 of the package 1 is formed by folding the sheet-shaped packaging material 2 and heat-sealing edges of the packaging material 2 together to thereby seal the internal housing portion housing the tobacco products. In the example shown in Fig. 2, the packaging material 2 has a rectangular shape and is folded around the tobacco products to form the outer sheath 3 that encloses the tobacco products in a sealed manner. The layer structure of the packaging material 2 and its details will be described later.

Numeral 31 shown in Fig. 1 represents heat-sealed portions formed by heat-fusing together overlapping edge portions of the outer sheath 3 (the packaging material 2). The heat-sealed portions 31 include a lateral heat-sealed portion 31A extending in the width direction (the left-right direction) of the package 1 and longitudinal heat-sealed portions 31B extend in the height direction (the upward-downward direction) of the package 1. In particular, when it is unnecessary to distinguish the lateral heat-sealed portion 31A and the longitudinal heat-sealed portions 31B from each other, they are referred to simply as the heat-sealed portions 31. In the present embodiment, each heat-sealed portion 31 is formed as a fin seal in which bent edge portions of the outer sheath 3 (the packaging material 2) are butted against each other.

As shown in Fig. 1, the longitudinal heat-sealed portions 31B are provided on the respective left and right sides of the package 1. Each of the longitudinal heat-sealed portions 31B extends from the upper end of the package 1 to its lower end. The lateral heat-sealed portion 31A extends across the entire width of the package 1 from one of the longitudinal heat-sealed portions 31B to the other longitudinal heat-sealed portion 31B. Opposite edge portions of the lateral heat-sealed portion 31A overlap the respective longitudinal heat-sealed portions 31B.

In the example shown in Fig. 1, a flattened substantially M-shaped notch is formed at the center of a forward edge of the lateral heat-sealed portion 31. This notch provides a V-shaped tab 33 for the lateral heat-sealed portion 31. However, the tab 33 is not essential for the package 1 and may be omitted as appropriate. No particular limitation is imposed on the shape, position, etc. of the tab 33.

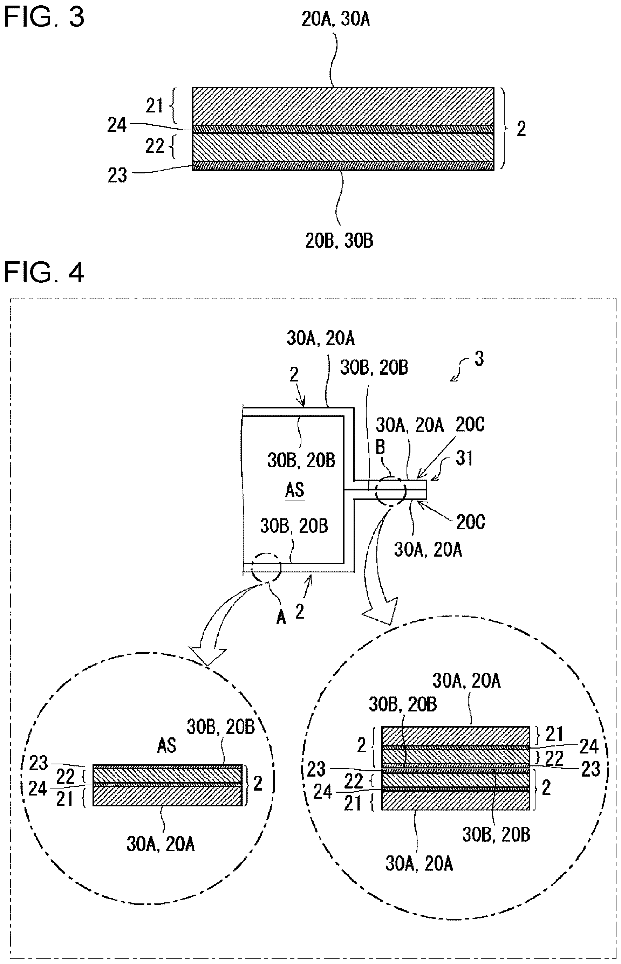

The outer sheath 3 of the package 1 includes a separable section 34 extending from the tab 33. The separable section 34 is a strip-shaped section extending from a rear edge 35A of an upper surface 35 of the outer sheath 3 to a front surface 36 thereof and demarcated by a pair of first tear-off lines 37. The first tear-off lines 37 extend upward from the respective edges of the V-shaped tab 33 and across the upper surface 35 and reach the rear edge 35A. A second tear-off line 38 is provided on the front surface 36 of the outer sheath 3 at a position above the tab 33. The second tear-off line 38 extends in the width direction of the package 1. The first tear-off lines 37 and the second tear-off line 38 are composed of weakened portions. The "weakened portions" are part of the surface of the outer sheath 3 of the package 1 (or the packaging material 2 forming the outer sheath 3), and the strength of the weakened portions is weaker than that of the other portions. For example, the weakened portions may be formed by subjecting the packaging material 2 to thinning processing (e.g., half-cutting) such that the thickness of the weakened portions is smaller than that of the other portions. In the present embodiment, it is preferable not to use rows of perforations formed by perforating the packaging material 2 as the "weakened portions," in order to ensure hermeticity of the package 1. Numeral 39 shown in Fig. 1 represents side surfaces of the outer sheath 3 of the package 1. When the packaging material 2 is subjected to half-cutting to form the weakened portions, if the weakened portions are formed on an aluminum-containing layer 22 side to be described in Fig. 3, the water vapor barrier property of the packaging material 2 may deteriorate. It is therefore preferable that the weakened portions are provided in a paper base layer 21 that does not largely contribute to the water vapor barrier property.

Fig. 3 is an illustration showing the layer structure of the packaging material 2 forming the outer sheath 3 of the package 1 according to embodiment 1. As shown in Fig. 3, the packaging material 2 has a layer structure including the paper base layer 21 containing a fibrous cellulose-based material, the aluminum-containing layer 22 stacked on the paper base layer 21, and a heat-seal layer 23.

In the present embodiment, the aluminum-containing layer 22 is formed from an aluminum foil and has an excellent water vapor barrier property. The aluminum-containing layer 22 (aluminum foil) is bonded to the paper base layer 21 using an adhesive 24. In the packaging material 2, the heat-seal layer 23 is formed as an outer layer on at least one side. The heat-seal layer 23 is formed by coating a coating target with a heat-seal varnish containing a heat-seal agent used to heat-seal (heat-fuse) edge portions of the packaging material 2 together (to form the heat-sealed portions 31 shown in Fig. 1). In the mode shown in Fig. 3, the heat-seal layer 23 is stacked on the aluminum-containing layer 22. In this example, the heat-seal layer 23 is formed by applying the heat-seal varnish containing the heat-seal agent to the aluminum-containing layer 22.

The thickness of the aluminum-containing layer 22 is preferably about 1 µm or more and more preferably about 5 µm or more. In one exemplary mode, the thickness of the aluminum-containing layer 22 is less than about 15 µm and preferably less than about 10 µm. From the viewpoint of environmental consciousness, it is preferable that the upper limit of the thickness of the aluminum-containing layer 22 is specified as described above so that the thickness of the aluminum-containing layer 22 is not excessively large. From the viewpoint of preventing the formation of small holes in the aluminum-containing layer 22 to prevent leakage of water vapor through the small holes, it is preferable that the lower limit of the thickness of the aluminum-containing layer 22 is specified as described above so that the aluminum-containing layer 22 is not excessively thin.

In one exemplary mode, the thickness of the paper base layer 21 is about 15 µm or more. The thickness of the paper base layer 21 is preferably about 20 µm or more and more preferably about 30 µm or more. In one exemplary mode, the thickness of the paper base layer 21 is less than about 110 µm. The thickness of the paper base layer 1 is preferably less than about 90 µm and more preferably less than about 70 µm. By specifying the lower limit of the thickness of the paper base layer 21 as described above, the packaging material 2 can reliably have the required strength and the required stiffness. By specifying the upper limit of the thickness of the paper base layer 21, an excessive increase in the strength and stiffness of the packaging material 2 can be prevented, and a reduction in production suitability for bending etc. can be prevented.

In one exemplary mode, the basis weight of the paper base layer 21 is about 25 g/m² or more. The basis weight of the paper base layer 21 is preferably about 35 g/m² or more and more preferably about 40 g/m² or more. In one exemplary mode, the basis weight of the paper base layer 21 is less than about 65 g/m². The basis weight of the paper base layer 21 is preferably less than about 60 g/m² and more preferably less than about 55 g/m².

The ratio of the thickness of the aluminum-containing layer 22 to the thickness of the paper base layer 21 is preferably about 0.01 and more preferably about 0.2 or more. The ratio of the thickness of the aluminum-containing layer 22 to the thickness of the paper base layer 21 is preferably about less than 1 and more preferably less than about 0.6. In a particularly preferable mode, the ratio of the thickness of the aluminum-containing layer 22 to the thickness of the paper base layer 21 is about 0.2 to about 0.6.

In one exemplary mode, the paper base layer 21 contains the fibrous cellulose-based material in an amount of 30% by weight or more. The paper base layer 21 contains the fibrous cellulose-based material in an amount of preferably 50% by weight or more and more preferably 70% by weight or more. For example, the paper base layer 21 is formed substantially only of the fibrous cellulose-based material. When the content of the fibrous cellulose-based material in the paper base layer 21 is large, the ease of bending the packaging material 2 when the packaging material 2 is folded around the tobacco products increases, and the production process is simplified. Moreover, when the content of the fibrous cellulose-based material in the paper base layer 21 is large, the paper base layer 21 can be more easily decomposed, and therefore the package 1 provided is more environmentally conscious. Preferably, the paper base layer 21 is formed as coated paper with a coating layer containing calcium carbonate, kaolin, etc. formed on the surface thereof.

No particular limitation is imposed on the heat-seal agent contained in the heat-seal varnish forming the heat-seal layer 23. Preferably, the heat-seal agent has a melting point of about 100 to about 200°C. If the melting point of the heat-seal agent is lower than 100°C, the heat-seal agent may melt during time periods other than the production process. In this case, it is feared that the heat-seal agent may be bonded to the tobacco products. If the melting point of the heat-seal agent is higher than 200°C, it is time-consuming to melt the heat-seal agent during the production process, and it may be difficult to produce the packages at high speed. By setting the melting point of the heat-seal agent contained in the heat-seal varnish to about 100 to about 200°C as described above, the occurrence of the problems described above can be preferably prevented. The heat-seal agent may be a water-based agent or may be a solvent-based agent. The heat-seal agent may be an emulsion-based agent or may be a non-emulsion-based agent. No particular limitation is imposed on the type of resin forming the heat-seal agent. Examples of the resin include ethylene-vinyl acetate (EVA) resins, acrylic resins, ionomer resins, and polyolefin-based resins.

The thickness of the heat-seal layer 23 is preferably from 0.5 µm to 5 µm inclusive. When the thickness of the heat-seal layer 23 is specified within the above range, edge portions of the packaging material 2 can be bonded together reliably when the packaging material 2 is folded to form the package 1 (the outer sheath 3), and the amount of the resin used can be reduced. Specifically, with the packaging material 2 provided, the package 1 (the outer sheath 3) can be produced with ease. Moreover, the packaging material 2 and the package 1 (the outer sheath 3) using the packaging material 2 are environmentally conscious.

Numeral 20A shown in Fig. 3 represents a first surface of the packaging material 2, and numeral 20B represents a second surface of the packaging material 2 that is opposite to the first surface 20A. The first outer surface 20A and the second outer surface 20B of the packaging material 2 are formed from the surfaces of materials included in the outer layers of the packaging material 2. Numeral 30A also shown in Fig. 3 represents the outer surface of the outer sheath 3 (see Fig. 1), and numeral 30B represents the inner surface of the outer sheath 3. The term "inner surface" as used herein is used to represent the surface of the assembled package 1 (the outer sheath 3) that faces the internal housing portion formed inside the package 1 (the outer sheath 3) (e.g., faces the tobacco products). The term "outer surface" as used herein is used to represent the surface of the package 1 (the outer sheath 3) that is exposed to the outside, i.e., the surface on the opposite side of the "inner surface."

The mode shown in Fig. 3 will be described using the following example. With the packaging material 2 folded to form the package 1 (the outer sheath 3), the first surface 20A the packaging material 2 is disposed so as to face the outside, and the outer surface 30A of the outer sheath 3 is thereby formed. In addition, the first surface 20A of the packaging material 2 is disposed so as to face the inner side (the internal housing portion side, the tobacco product side), and the inner surface 30B of the outer sheath 3 is thereby formed.

As shown in Fig. 3, in the layer structure of the packaging material 2, the heat-seal layer 23, the aluminum-containing layer 22, and the paper base layer 21 are stacked from the second surface 20B side (the inner surface 30B side of the outer sheath 3 in the package formed) toward the first surface 20A side (the outer surface 30A side of the outer sheath 3 in the package formed). In the layer structure of the packaging material 2 shown in Fig. 3, the paper base layer 21 and the heat-seal layer 23 form the outer layers of the packaging material 2. In the exemplary mode shown in Fig. 3, the heat-seal layer 23 is formed so as to form only the second surface 20B (one surface) of the packaging material 2 that forms the inner surface 30B of the outer sheath 3 in the package formed.

In the present embodiment, the heat-seal layer 23 formed as the outer layer on the second surface 20B side of the packaging material 2 is formed by coating the entire surface of the aluminum-containing layer 22 (the entire surface of the aluminum foil) with the heat-seal varnish containing the heat-seal agent so as to form the entire second surface 20B. However, the heat-seal layer 23 may be formed by coating part of the surface of the aluminum-containing layer 22 with the heat-seal varnish. For example, the heat-seal varnish may be applied to part of the surface of the aluminum-containing layer 22 (the surface of the aluminum foil) such that only edge portions of the packaging material 2 that are to be bonded to each other during production of the package 1 (the outer sheath 3) are pattern-coated with the heat-seal varnish. In this case, the heat-seal layer 23 is formed so as to form only part of the second surface 20B (one surface) of the packaging material 2. Although details will be described later, the heat-seal layer 23 may be formed so as to form opposite surfaces (the first surface 20A and the second surface 20B) of the packaging material 2. In this case, the heat-seal layer 23 may be formed so as to form the entire areas of the opposite surfaces (the first surface 20A and the second surface 20B) of the packaging material 2 or may be formed only in areas (edge portions) in which the heat-sealed portions 31 are to be formed.

As the tobacco products housed in the internal housing portion of the package 1 in the present embodiment, various types of products containing tobacco raw materials may be housed. For example, the tobacco products may be smoking articles such as cigarettes, cigars, or cigarillos or snuff such as snus. The tobacco products housed in the package 1 may be non-combustible smoking articles each including a carbonaceous heat source and an aerosol generation unit. The tobacco products may be tobacco sticks used for non-combustible tobacco articles. The above tobacco products are examples, and various other tobacco products containing tobacco raw materials may be housed in the package 1.

Referring next to Fig. 2, the manner of folding the packaging material 2 when the package 1 is assembled will be described. As described above, the packaging material 2 shown in Fig. 2 has a rectangular sheet shape. Fig. 2 is a plan view (developed view) of the packaging material 2 when the second surface 20B thereof (the surface that later becomes the inner surface 30B of the outer sheath 3) is viewed from above. Dash-dot lines shown in Fig. 2 are fold lines formed in the packaging material 2. As is clear from the plan view (developed view) shown in Fig. 2, regions of the packaging material 2 that are demarcated by the fold lines form respective portions of the outer sheath 3 shown in Fig. 1. Moreover, as described in Fig. 3, the second surface 20B of the packaging material 2 is formed such that the heat-seal layer 23 is exposed at the entire second surface 20B. This heat-seal layer 23 allows the heat-sealed portions 31 described in Fig. 1 to be formed.

More particularly, the packaging material 2 has regions including a lower front surface region 64 that later becomes part of the front surface 36 of the outer sheath 3 and further including, in the following order on the upper side of the lower front surface region 64, a bottom surface region 80 that later becomes the bottom surface of the outer sheath 3, a back surface region 86 that later becomes the back surface of the outer sheath 3, an upper surface region 92 that later becomes the upper surface of the outer sheath 3, and an upper front surface region 98 that later becomes the rest of the front surface 36 of the outer sheath 3. Side surface regions 66, 82, 88, 94, and 100 that form side surfaces of the outer sheath 3 are located on the left and right sides of the regions 64, 80, 86, 92, and 98, respectively.

Notch portions 74 and 102 that form the V-shaped tab 33 are formed in a lower end portion of the lower front surface region 64 of the packaging material 2 and an upper end portion of the upper front surface region 98, respectively. In the lower front surface region 64, the upper front surface region 98, and the upper surface region 92, weakened portions 106 for forming the first tear-off lines 37 and weakened portions 76 for forming the second tear-off line 38 are provided to form the separable section 34 described above. Dash-dot lines in the side surface regions 82 and 94 of the packaging material 2 indicate that the packaging material 2 is to be gusseted in these side surface regions 82 and 94 when the packaging material 2 is folded. Lower edge portions 54a of the lower front surface region 64 and the side surface regions 66 (these portions are hatched in Fig. 2) and upper edge portions 54b of the upper front surface region 98 and the side surface regions 100 (these portions are hatched in Fig. 2) are to be butted against each other and heat-fused (heat-sealed) to form the lateral heat-sealed portion 31A. In each of the left and right side surface regions of the packaging material 2, an outer side edge portion 50a (hatched in Fig. 2) is folded upon itself and heat-fused to form the corresponding longitudinal heat-sealed portion 31B. In the packaging material 2, end portions of the lower edge portions 54a and the upper edge portions 54b are connected to end portions of the pair of outer side edge portions 50a. Specifically, these edge portions are formed in an outer circumferential edge region of the packaging material 2 so as to form a rectangular frame shape.

The packaging material 2 having the structure described above is folded around the bundle of the tobacco products and forms the outer sheath 3 having the internal housing portion that houses the tobacco products in a sealed manner. To form the packaging material 2 into a package form, first, the bundle of the tobacco products is placed on, for example, the back surface region 86 of the packaging material 2, and then the regions of the packaging material 2 are folded successively along the fold lines. In this case, the lower edge portions 54a of the lower front surface region 64 and the side surface regions 66 and the upper edge portions 54b of the upper front surface region 98 and the side surface regions 100 are butted against each other and heat-fused (heat-sealed) together. Specifically, with the heat-seal layer 23 formed as the outer layer on the second surface 20B side folded upon itself, the overlapping edge portions of the packaging material 2 are heated and pressurized.

As a result, the heat-seal agent contained in the heat-seal layer 23 is heat-fused, and the lateral heat-sealed portion 31A is thereby formed. The lateral heat-sealed portion 31A is formed as a fin seal in which the second surface 20B of the packaging material 2 that forms the inner surface 30B of the outer sheath 3 is in contact with itself and the overlapping portions of the second surface 20B are bonded together (fin-sealed). With the lateral heat-sealed portion 31A, the influence of heat on the tobacco products during heat sealing can be smaller than that when a seal is formed by bonding together edge portions of the packaging material 2 that are lapped on each other such that the first surface 20A and the second surface 20B are in contact with each other.

Once the lateral heat-sealed portion 31A has been formed, the packaging material 2 forms rectangular portions protruding from opposite sides of the bundle of the tobacco products. These rectangular portions are gusseted in the side surface regions 82 and 94. Then the side surface regions 66, 82, 88, 94, and 100 are folded along fold lines so as to cover the side surfaces of the bundle of the products on the respective sides, and the side surfaces of the outer sheath 3 are thereby formed. The gussets in the side surface regions 82 and 94 are formed along the dash-dot lines in the side surface regions 82 and 94 shown in Fig. 2. When the side surface regions 66, 82, 88, 94, and 100 are folded, outer side edge portions of side surface regions on the same side of the packaging material 2 are brought into contact with themselves, and the overlapping portions are heat-fused (heat-sealed). As a result, the heat-seal agent contained in the heat-seal layer 23 is heat-fused, and the longitudinal heat-sealed portions 31B are thereby formed. Each of the longitudinal heat-sealed portions 31B is formed as a fin seal in which the second surface 20B of the packaging material 2 that forms the inner surface 30B of the outer sheath 3 is in contact with itself and the overlapping portions of the second surface 20B are bonded together, as is the lateral heat-sealed portion 31. In this manner, the influence of heat on the tobacco products during heat sealing can be further reduced.

The outer sheath 3 is formed from the packaging material 2 in the manner described above, and the formation of the package 1 with the tobacco products sealed in the internal housing portion is completed. The packaging material 2 in the present embodiment includes the paper base layer 21 containing the fibrous cellulose-based material, the aluminum-containing layer 22 stacked on the paper base layer 21, and the heat-seal layer 23 formed as an outer layer on at least one side of the packaging material 2 and produced by applying the heat-seal agent used to heat-seal the edges of the packaging material 2, so that the package 1 (the outer sheath 3) formed can have excellent sealing performance. Specifically, the package 1 provided can have excellent sealing performance without sealing the package with an additional exterior resin film. Therefore, an increase or decrease in the amount of water vapor in the tobacco products during the distribution process of the package 1 or during storage of the package 1 can be preferably prevented. Since the thickness of the heat-seal layer 23 of the packaging material 2 is from 0.5 µm to 5 µm inclusive, the edge portions of the packaging material 2 can be reliably bonded together when the packaging material 2 is folded to form the package 1 (the outer sheath 3), and the amount of the resin used can be reduced. Specifically, the package 1 (the outer sheath 3) can be produced with ease, and the packaging material 2 provided and the package 1 (the outer sheath 3) using the packaging material 2 are environmentally conscious. In the present embodiment, the thickness of the heat-seal layer 23, which is specified in the range of from 0.5 µm to 5 µm inclusive, means the dry thickness of the heat-seal agent. It is therefore preferable to adjust the amount of the heat-seal varnish applied such that the final thickness of the heat-seal layer 23 in the completed packaging material 2 (after the heat-seal agent has dried) is in the range of from 0.5 µm to 5 µm inclusive.

Fig. 4 is an illustration schematically showing a cross-sectional structure of the outer sheath 3 including the heat-sealed portions 31 in the package 1 according to embodiment 1. Fig. 4 shows the cross-sectional structure of a heat-sealed portion 31 and the outer sheath 3 in the vicinity of this heat-sealed portion 31. Symbol AS shown in Fig. 4 represents the internal housing portion AS sealed by the outer sheath 3. In Fig. 4, the tobacco products housed in the internal housing portion AS are omitted. Fig. 4 also shows enlarged illustrations of regions A and B surrounded by chain lines. Numeral 20C shown in Fig. 4 represents edge portions of the packaging material 2. The overlapping edge portions 20C of the packaging material 2 are heat-fused to form a fin seal, and the heat-sealed portion 31 is thereby formed.

As shown in the enlarged illustration of region A in Fig. 4, the heat-seal layer 23, the aluminum-containing layer 22, and the paper base layer 21 are stacked from the inner surface 30B side of the outer sheath 3(the second surface 20B side of the packaging material 2), and the paper base layer 21 forms the outer surface 30A of the outer sheath 3. Moreover, the heat-seal layer 23 located on the first surface 20A side of the packaging material 2 forms the inner surface 30B of the outer sheath 3.

As shown in the enlarged illustration of region B in Fig. 4, in the present embodiment, the aluminum-containing layer 22 having the water vapor barrier property is disposed immediately outside the heat-seal layer 23. In this case, the overlapping portions of the aluminum-containing layer 22 coated with the heat-seal varnish forming the heat-seal layer 23 can be in close contact with each other in the heat-sealed portion 31. Therefore, in the heat-sealed portion 31, water vapor is less likely to pass through the bonding interface between the bonded portions of the packaging material 2. Thus, the sealing performance of the outer sheath 3 can be further improved. Moreover, in the mode in which the heat-seal layer 23 is stacked on the aluminum-containing layer 22 as shown in Fig. 4, the surface of the aluminum-containing layer 22 is the surface coated with the heat-seal varnish, and this is advantageous because the heat-seal varnish is unlikely to soak into the aluminum-containing layer 22 during coating. Therefore, the amount of the resin used to bond the edge portions of the packaging material 2 can be preferably reduced.

The layer structure of the packaging material 2 in the present embodiment is not limited to that described in Figs. 2 and 4, and various other structures can be used. For example, the paper base layer 21 and the aluminum-containing layer 22 in the layer structure described in Figs. 2 and 4 may be exchanged with each other. Moreover, the packaging material 2 may include, in addition to the paper base layer 21, the aluminum-containing layer 22, and the heat-seal layer 23, one or more optional additional layers. For example, in the packaging material 2, an overcoat varnish layer may be formed on the paper base layer 21 by applying, for example, an overprint varnish to the surface of the paper base layer 21. Of course, an ink for a design or a brand logo may be printed on the surface of the paper base layer 21.

In the mode described in the above embodiment, the heat-seal layer 23 is formed so as to form the entire area of the second surface 20B of the packaging material 2 that forms the inner surface 30B of the outer sheath 3 in the package formed. However, the heat-seal layer 23 may be formed only in outer edge portions of the packaging material 2 for forming the heat-sealed portions 31, i.e., only in the lower edge portions 54a, the upper edge portions 54b, and the pair of outer side edge portions 50a (the hatched regions in Fig. 2). When the outer edge portions are pattern-coated with the heat-seal varnish forming the heat-seal layer 23, the heat-seal varnish may be applied to a slightly broader area (e.g., by about 0.5 mm) than the design area in consideration of slight positional displacements during application. By forming the pattern of the heat-seal layer 23 only on part of one side of the packaging material 2, the amount of the resin used can be further reduced.

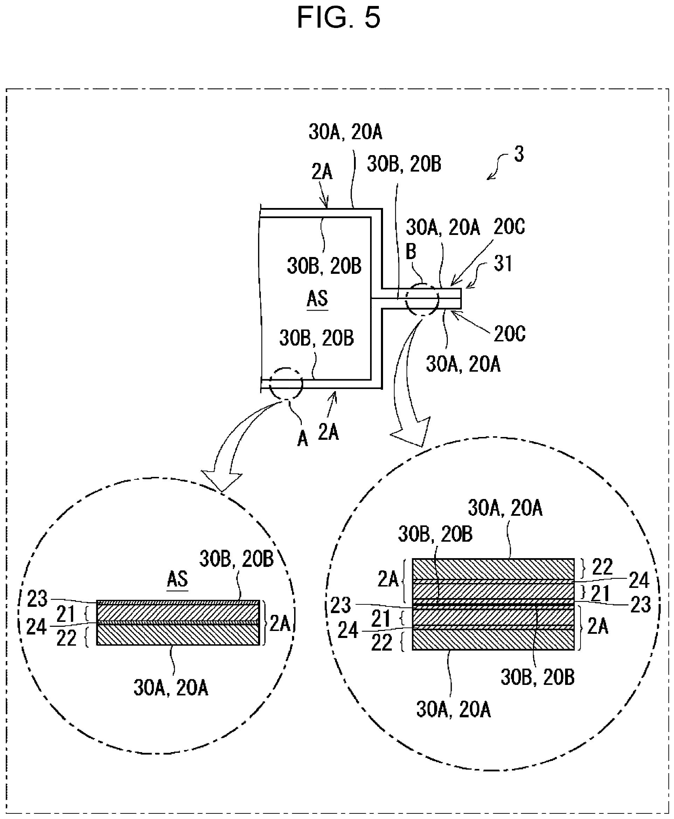

Fig. 5 is an illustration showing the layer structure of a packaging material 2A according to modification 1. In the present modification, the same components as those in the modes described above are denoted by the same symbols, and their detailed description will be omitted. In the example shown in Fig. 5, the packaging material 2A has a layer structure in which the paper base layer 21 and the aluminum-containing layer 22 in the packaging material 2 described in Figs. 2 and 4 are exchanged with each other. Specifically, as shown in an enlarged illustration of region A in Fig. 5, the heat-seal layer 23, the paper base layer 21, and the aluminum-containing layer 22 are stacked in this order from the inner surface 30B side of the outer sheath 3 (the second surface 20B side of the packaging material 2A). The aluminum-containing layer 22 forms the outer surface 30A of the outer sheath 3, and the heat-seal layer 23 forms the inner surface 30B of the outer sheath 3.

In modification 1 shown in Fig. 5 also, the heat-seal layer 23 may be formed so as to form the entire area of the second surface 20B of the packaging material 2A or may be formed only in outer edge portions of the packaging material 2 for forming the heat-sealed portions 31, i.e., only in the lower edge portions 54a, the upper edge portions 54b, and the pair of outer side edge portions 50a (the hatched regions in Fig. 2). Of course, in the present modification also, the packaging material 2A may include one or more optional additional layers. Moreover, an ink for a design or a brand logo may be printed on the surface of the aluminum-containing layer 22 of the packaging material 2A. For example, an overprint varnish may be applied to the aluminum-containing layer 22 to form an overcoat varnish layer on the aluminum-containing layer 22, and the overcoat layer may form the outer surface 30A of the outer sheath 3.

In modification 1 shown in Fig. 5 also, as in embodiment 1, the tobacco products can be sealed without sealing the package 1 with a separate exterior resin film, and the amount of the resin material used can be reduced, so that the packaging material 2A and the package 1 provided are more environmentally conscious. In modification 1 shown in Fig. 5, the paper base layer 21 is interposed between the heat-seal layer 23 and the aluminum-containing layer 22. Therefore, as compared with the layer structure of the packaging material 2 shown in Fig. 4, water vapor can more easily pass through the paper base layer 21 interposed between the bonded portions of the aluminum-containing layer 22 of the packaging material 2 in each heat-sealed portion 31. Therefore, the water vapor barrier property of the layer structure shown in Fig. 4 is better than that of the layer structure in the present modification. In the mode in which the heat-seal layer 23 is stacked on the paper base layer 21 as shown in Fig. 5, the surface of the paper base layer 21 is the surface coated with the heat-seal varnish. Therefore, the heat-seal varnish can more easily soak into the paper base layer 21 during application as compared with when the heat-seal varnish is applied to the aluminum-containing layer 22 as shown in Fig. 4. In this case also, it is preferable to adjust the amount of the heat-seal varnish applied such that the thickness of the heat-seal layer 23 in the completed packaging material 2 (after the heat-seal agent has dried) is in the range of from 0.5 µm to 5 µm inclusive. When the heat-seal layer 23 is stacked on the paper base layer 21 as in the present modification, it is preferable that the paper base layer 21 is formed as coated paper with a coating layer containing calcium carbonate, kaolin, etc. formed on the surface and that the heat-seal layer 23 is stacked on the coating layer of the paper base layer 21. In this case, since the heat-seal varnish can be applied to the coating layer of the paper base layer 21, the heat-seal varnish is unlikely to soak into the paper base layer 21. Therefore, the amount of the resin used to form the heat-seal layer 23 can be more preferably reduced.

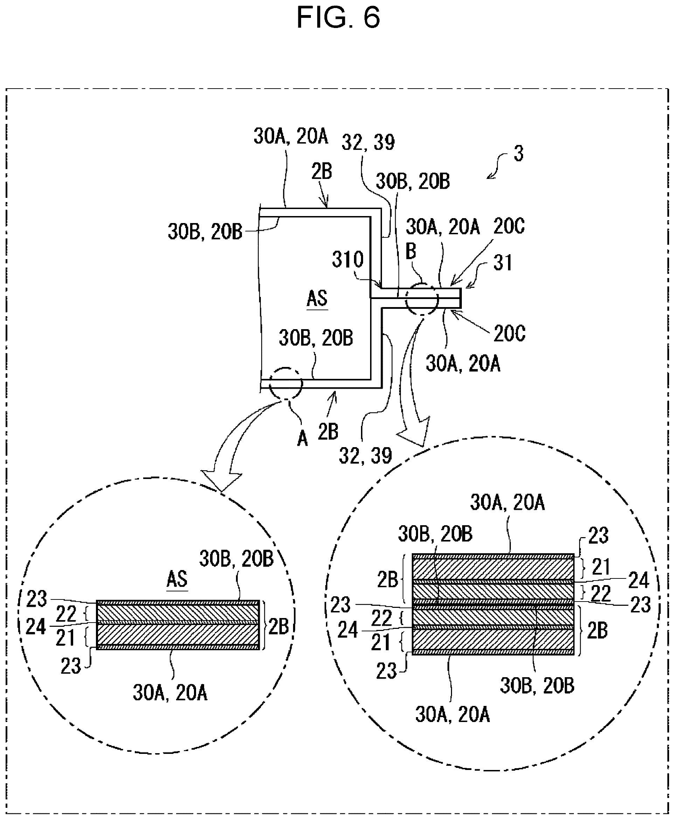

Fig. 6 is an illustration showing the layer structure of a packaging material 2B according to modification 2. In the present modification, the same components as those in the modes described above are denoted by the same symbols, and their detailed description will be omitted. In the packaging material 2B according to modification 2, the heat-seal layer 23 is formed so as to form the entire area of the first surface 20A of the packaging material 2B (the outer surface 30A of the outer sheath 3) and the entire area of the second surface 20B (the inner surface 30B). The other features are the same as those of the packaging material 2 shown in Fig. 4. In the present modification, the heat-seal layer 23 may be formed only in outer edge portions of the first surface 20A and the second surface 20B of the packaging material 2B.

As described above, in the present modification, the heat-seal layer 23 is formed so as to form also the first surface 20A of the packaging material 2B that forms the outer surface 30A of the outer sheath 3. Therefore, each of the heat-sealed portions 31 formed as fin seals may be folded along a base end portion 310 (see Fig. 6) used as a fold line toward the outer surface 30A of the outer sheath 3. Then, for example, the outer surface 30A of the heat-sealed portion 31 may be brought into contact with the outer surface 30A in a proximal portion 32 of the outer sheath 3, and the overlapping portions of the outer surface 30A may be heat-fused together. The proximal portion 32 of the outer sheath 3 is a portion in the vicinity of the heat-sealed portion 31 and is a part of the outer surface 30A in a side surface 39 of the outer sheath 3, the part of the outer surface 30A being located in a portion that can come into contact with the outer surface 30A of the heat-sealed portion 31 when the heat-sealed portion 31 is folded along the base end portion 310 toward the side surface 39. When the heat-seal layer 23 is formed so as to form the first surface 20A and the second surface 20B (opposite surfaces) of the packaging material 2B as described above, the flexibility in the shape of the heat-sealed portions 31 can be increased. However, from the viewpoint of the amount of the resin used, it is preferable to form the heat-seal layer 23 only on one side of the packaging material because the amount of the resin used is smaller than that when the heat-seal layer 23 is formed on opposite sides of the packaging material. The mode in which the heat-seal layer 23 is formed on opposite sides of the packaging material, the heat-sealed portions 31 are folded over onto the side surfaces of the outer sheath 3, and the overlapping portions of the outer surface 30A are bonded together may be applied to the packaging material 2A having the layer structure described in modification 1.

The package 1 formed using any of the packaging materials according to embodiment 1 and the modifications described above may be distributed in the form of a pillow package shown in Fig. 1 or may be distributed after packed into a known outer package such as a hard package or a soft package.

### <Embodiment 2>

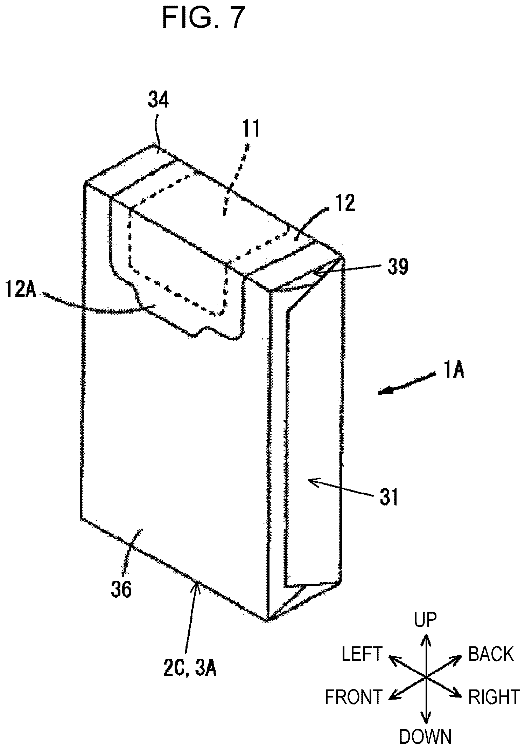

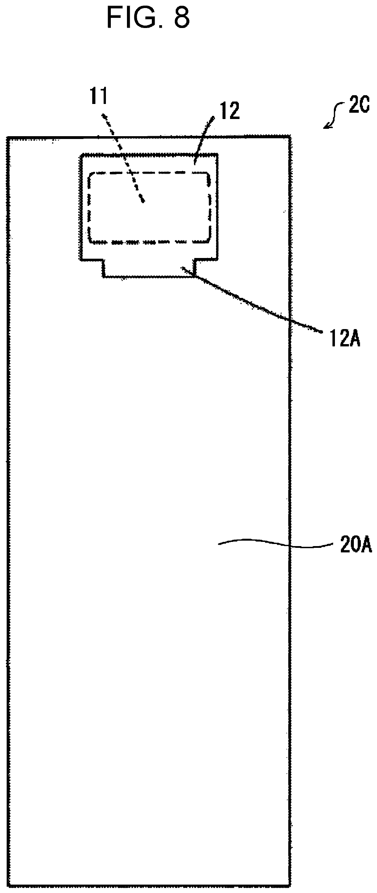

Next, a package 1A according to embodiment 2 will be described. In the present embodiment, the same components as those described in the modes described above are denoted by the same numerals, and their detailed description will be omitted. Fig. 7 is an outer perspective view of the package 1A in embodiment 2. Fig. 8 is a plan view of a packaging material 2C for forming an outer sheath 3A of the package 1A according to embodiment 2.

In the example shown in Fig. 7, the package 1A has a substantially rectangular parallelepipedic box shape. The package 1A includes the outer sheath 3A formed into a package form by folding the sheet-shaped packaging material 2C shown in Fig. 8 and bonding edge portions of the packaging material 2C together by heat sealing. A sealed internal housing portion is formed inside the outer sheath 3A of the package 1, and tobacco products are housed in the internal housing portion.

Fig. 7 shows the upward, downward, left, right, frontward, and backward directions of the package 1A. However, the upward, downward, left, right, frontward, and backward directions of the package 1A are used to describe the relative positional relations among components of the package 1A and do not indicate the absolute directions of the package 1A. The upward-downward direction of the package 1A may be referred to as a "height direction," and the left-right direction may be referred to as a "width direction." The forward-backward direction may be referred to as a "depth direction."

Numeral 34 in the figure represents an upper surface of the package 1A, and numeral 36 represents a front surface of the package 1A. Numeral 39 represents a side surface of the package 1A. The cigarette 1A has a withdrawing opening 11 through which a tobacco product can be withdrawn from the inside of the outer sheath 3A, and the withdrawing opening 11 is covered with a cover flap 12. The cover flap 12 is attached to the surface of the outer sheath 3A using, for example, a weak adhesive glue and is a re-peelable cover. The cover flap 12 has a tab 12A. The user can withdraw a tobacco product housed in the internal housing portion by pinching the tab 12A, pulling up the cover flap 12, and peeling at least part of the cover flap 12 from the outer surface 30A of the outer sheath A to thereby open the withdrawing opening 11.

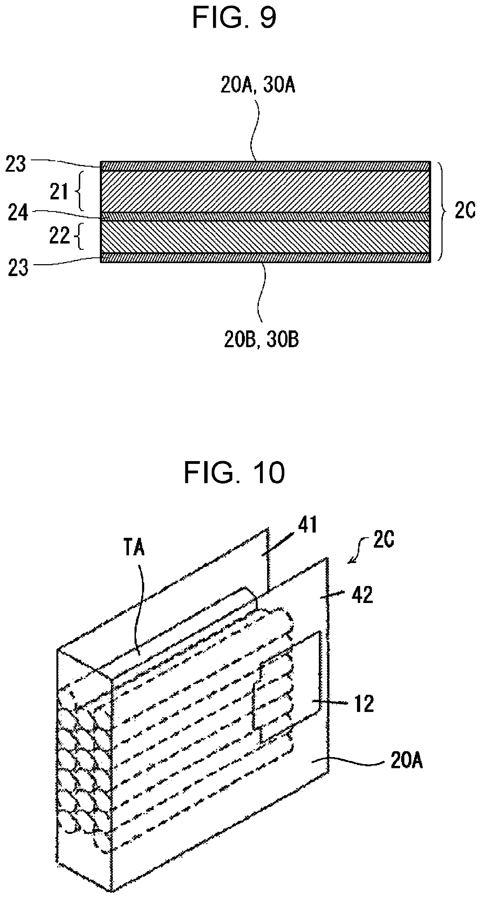

Fig. 9 is an illustration showing the layer structure of the packaging material 2C forming the package 1A according to embodiment 2. In the description of the layer structure of the packaging material 2C, the same elements as those in the packaging material 2 according to embodiment 1 are denoted by the same numerals, and their detailed description will be omitted. In the packaging material 2C, the heat-seal layer 23 is formed so as to form the first surface 20A and the second surface 20B. Specifically, opposite outer layers of the packaging material 2 in the thickness direction are formed from the heat-seal layer 23.

In the packaging material 2C, the heat-seal layer 23, the aluminum-containing layer 22, the paper base layer 21, and the heat-seal layer 23 are stacked in this order from the second surface 20B. In the packaging material 2C in the present embodiment also, the aluminum-containing layer 22 may be formed from an aluminum foil having an excellent water vapor barrier property. The aluminum-containing layer 22 is bonded to the paper base layer 21 using the adhesive 24. The heat-seal layer 23 formed as the outer layer on the first surface 20A side of the packaging material 2C is formed by applying a heat-seal varnish containing a heat-seal agent to the paper base layer 21. The heat-seal layer 23 formed as the outer layer on the second surface 20B side of the packaging material 2C is formed by applying the heat-seal varnish containing the heat-seal agent to the aluminum-containing layer 22. In this example, the heat-seal layer 23 is formed over the entire areas (entire portions) on opposite sides (the first surface 20A side and the second surface 20B side) of the packaging material 2C. However, as described later, the heat-seal layer 23 may be pattern-formed in part on the first surface 20A side and the second surface 20B side of the packaging material 2C. The paper base layer 21, the aluminum-containing layer 22, and the heat-seal layer 23 that form the packaging material 2C have already been described in embodiment 1, and their detailed description will be omitted. In the example described below, the packaging material 2C is folded into the form of the package 1A (the outer sheath 3A) such that the first surface 20A of the packaging material 2C faces the outside and forms the outer surface 30A of the outer sheath 3 and that the first surface 20A of the packaging material 2C faces the inner side (the internal housing portion side, the tobacco product side) and forms the inner surface 30B of the outer sheath 3.

Figs. 10 to 13 are illustrations showing a procedure for folding the packaging material 2C when the package 1A according to embodiment 2 is assembled. The packaging material 2C in the sheet form as shown in Fig. 8 is prepared. The packaging material 2C has a rectangular shape as shown in Fig. 8. The packaging material 2C has the withdrawing opening 11 formed therein, and the cover flap 12 is attached to the first surface 20A of the packaging material 2C using a weak adhesive glue so as to cover the withdrawing opening 11. Fig. 8 is a plan view when the packaging material 2C is viewed from the first surface 20A side. In Fig. 8, fold lines in the packaging material 2C are omitted.

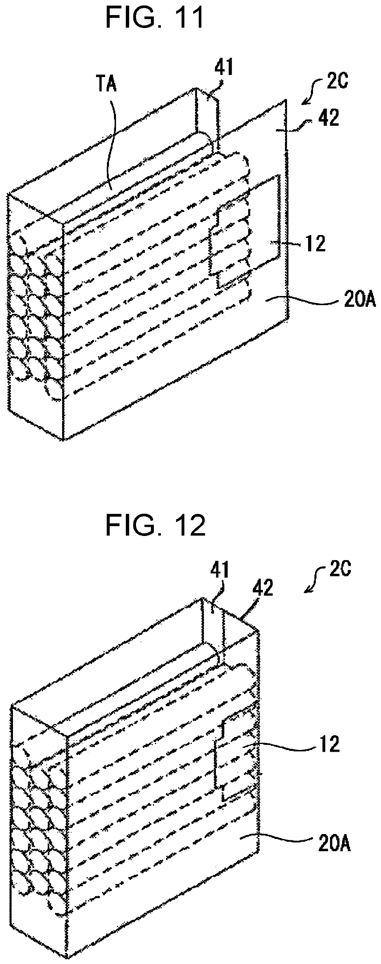

To assemble the package 1A, first, the packaging material 2C is folded along the fold lines (not shown) into a U-shape so as to surround tobacco products TA as shown in Fig. 10. In this state, the packaging material 2C forms rectangular portions 41 and 42 protruding from an end face of the bundle of the tobacco products TA. Then, as shown in Figs. 11 and 12, the rectangular portions 41 and 42 are folded over onto the end face of the bundle of the tobacco products TA. The rectangular portion 42 is placed on the rectangular portion 41, and the rectangular portions 41 and 42 are heat-fused together.

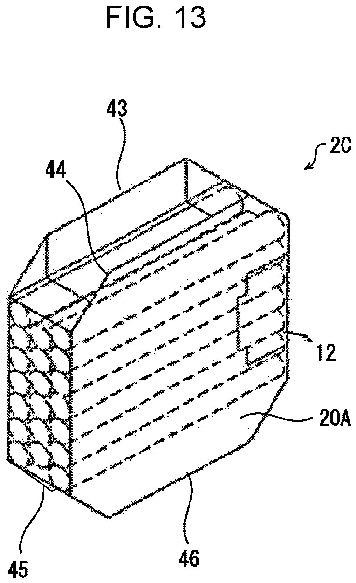

Next, protruding portions of the packaging material 2C that protrude from opposite side surfaces of the bundle of the tobacco products TA are gusseted to form trapezoidal flaps 43 to 46 as shown in Fig. 13. Next, the trapezoidal flaps 43 to 46 are folded along their respective base end portions. In this case, the trapezoidal flap 43 is placed on the trapezoidal flap 44, and these trapezoidal flaps 43 and 44 are heat-fused together to form a heat-sealed portion 31. Similarly, the trapezoidal flap 45 is placed on the trapezoidal flap 46, and these trapezoidal flaps 45 and 46 are heat-fused together to form a heat-sealed portion 31 (see Fig. 7). The formation of the package 1A shown in Fig. 7 is thereby completed.

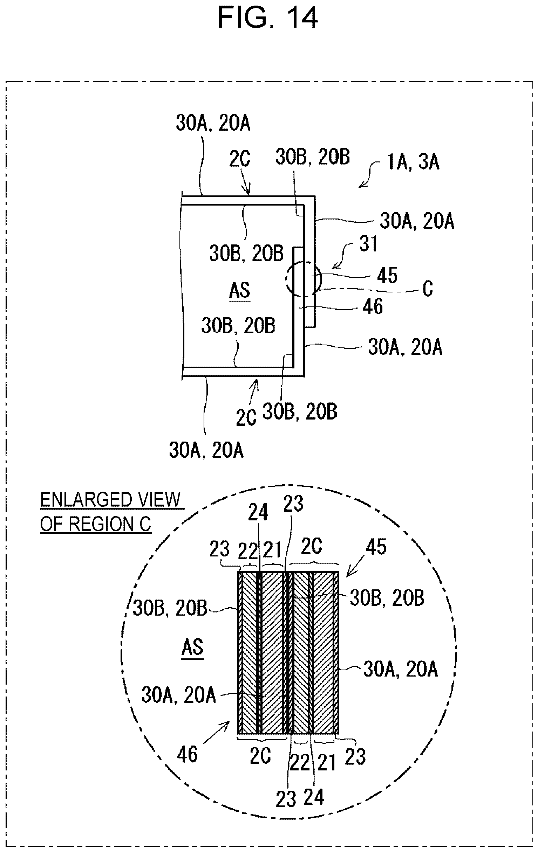

Fig. 14 is an illustration schematically showing a cross-sectional structure of a portion near a heat-sealed portion 31 in the package 1A according to embodiment 2. In Fig. 14, the tobacco products housed in the internal housing portion AS are omitted. Fig. 14 also shows a schematic enlarged view of region C surrounded by a chain line. The heat-sealed portion 31 in the package 1A (the outer sheath 3A) includes the pair of trapezoidal flaps 45 and 46 overlapping each other. Specifically, the inner surface 30B of the trapezoidal flap 45 (the second surface 20B of the packaging material 2C) located on the upper side and the outer surface 30A of the trapezoidal flap 46 (the first surface 20A of the packaging material 2C) located on the lower side are lap-bonded together. The manner of bonding the trapezoidal flaps 43 and 44 in a heat-sealed portion 31 on the other side surface 39 of the package 1A (the outer sheath 3A) is the same as the manner of bonding the trapezoidal flaps 45 and 46 shown in Fig. 14. Specifically, in the package 1A according to embodiment 2, the heat-seal layer 23 is formed so as to form the outer surface 30A (the first surface 20A of the packaging material 2C) and the inner surface 30B (the second surface 20B of the packaging material 2C), and each heat-sealed portion 31 is formed as a lap seal in which the heat-seal layer 23 formed on the inner surface 30B side of one edge portion of the packaging material 2C (on the second surface 20B side of the packaging material 2C) and the heat-seal layer 23 formed on the outer surface 30A side of another edge portion (on the first surface 20A side of the packaging material 2C) are lap-bonded together

As described above, the packaging material 3C in the present embodiment and the package 1A formed using the packaging material 3C have the same effects as those of the packaging materials and the packages according to embodiment 1 and the modifications described above. Specifically, the tobacco products TA can be sealed without sealing the package 1A with a separate external resin film. Moreover, the amount of the resin material used can be reduced, so that the packaging material 2C and the package 1A provided are more environmentally conscious than conventional products.

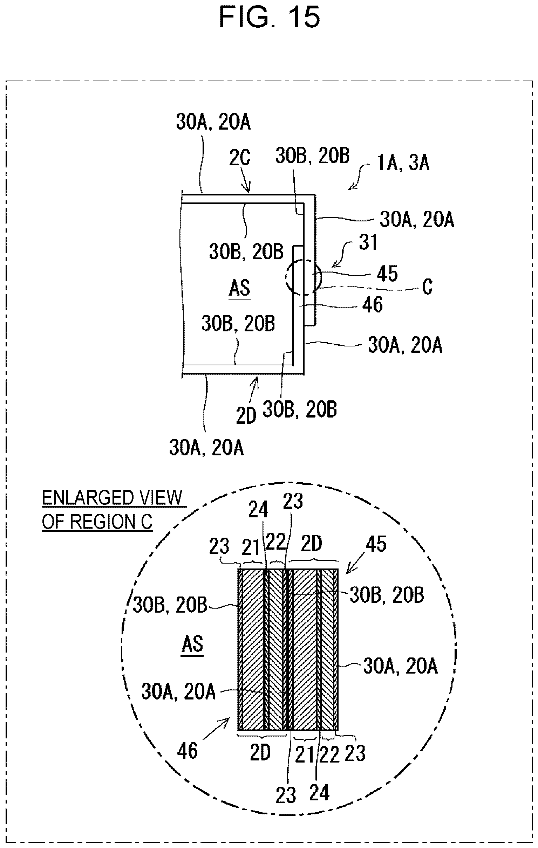

The packaging material 2C in the present embodiment may have a layer structure in which the paper base layer 21 and the aluminum-containing layer 22 are exchanged with each other. Fig. 15 is an illustration schematically showing a cross-sectional structure of a portion near a heat-sealed portion 31 when a packaging material 2D according to modification 3 is used to form a package 1A. Modification 3 is the same as the mode described in Figs. 7 to 14 except for the layer structure of the packaging material 2D, and the same effects as those of the packaging material 2C according to embodiment 2 are obtained.

In the exemplary modes described in embodiment 2 and modification 3, the heat-seal layer 23 is formed so as to form the entire areas (entire portions) of opposite surfaces (the first surface 20A and the second surface 20B) of the packaging material 2C, 2D, but this is not a limitation. For example, since the heat-sealed portions 31 are to be formed in outer edge portions of the first surface 20A and the second surface 20B of the packaging material 2C, 2D, the heat-seal layer 23 may be formed only in these outer edge portions. In this manner, the amount of the resin used to form the package 1A (the outer sheath 3A) can be further reduced.

The embodiments and modifications of the tobacco product packaging material according to the present invention and the package formed using the tobacco product packaging material have been described. The modes disclosed in the present description can be combined with any other features disclosed in the present description.

### Reference Signs List

- 1: package
- 2: packaging material
- 3: outer sheath
- 21: paper base layer
- 22: aluminum-containing layer
- 23: heat-seal layer
- 31: heat-sealed portion

## Claims

1. A tobacco product packaging material that is a sheet-shaped packaging material for forming a tobacco product package having a sealed internal housing portion that encloses a tobacco product, the tobacco product packaging material comprising:
a paper base layer containing a fibrous cellulose-based material;
an aluminum-containing layer stacked on the paper base layer; and
a heat-seal layer formed as an outer layer on at least one side of the packaging material by applying a heat-seal agent for heat-sealing together edge portions of the packaging material,
wherein the heat-seal layer has a thickness of from 0.5 µm to 5 µm inclusive.

2. The tobacco product packaging material according to claim 1, wherein the heat-seal layer is formed only on one side of the packaging material.

3. The tobacco product packaging material according to claim 2, wherein the heat-seal layer is formed over an entire area on the one side of the packaging material.

4. The tobacco product packaging material according to claim 2, wherein the heat-seal layer is formed only in an outer edge portion on the one side of the packaging material.

5. The tobacco product packaging material according to claim 1, wherein the heat-seal layer is formed on opposite sides of the packaging material.

6. The tobacco product packaging material according to claim 5, wherein the heat-seal layer is formed over entire areas on the opposite sides of the packaging material.

7. The tobacco product packaging material according to claim 5, wherein the heat-seal layer is formed only in outer edge portions on the opposite sides of the packaging material.

8. A tobacco product package formed from the tobacco product packaging material according to claim 1, the package comprising:
a tobacco product housed in the internal housing portion sealed by the packaging material; and
a heat-sealed portion formed by heat-sealing together edge portions of the packaging material.

9. The tobacco product package according to claim 8, wherein the heat-seal layer of the packaging material is formed so as to form at least an inner surface of the package that faces the internal housing portion, and
wherein the heat-sealed portion is formed as a fin seal in which bent edge portions of the packaging material are butted against each other.

10. The tobacco product package according to claim 9, wherein the aluminum-containing layer of the packaging material is disposed on an inner surface side of the package, wherein the paper base layer is disposed on an outer surface side opposite to the inner surface, and wherein the heat-seal layer is stacked on the aluminum-containing layer.

11. The tobacco product package according to claim 9 or 10, wherein the heat-seal layer of the packaging material is formed so as to form also an outer surface of the package that is opposite to the inner surface thereof, and
wherein the heat-sealed portion formed as the fin seal is folded over onto a portion close to the heat-sealed portion, and the outer surface of the heat-sealed portion and the outer surface of the portion close to the heat-sealed portion are bonded together

12. The tobacco product package according to claim 8, wherein the heat-seal layer of the packaging material is formed so as to form an inner surface of the package that faces the internal housing portion and to form an outer surface of the package that is opposite to the inner surface, and
wherein the heat-sealed portion is formed as a lap seal in which the heat-seal layer formed so as to form the inner surface in one edge portion of the packaging material and the heat-seal layer formed so as to form the outer surface in another edge portion of the packaging material are lapped together
